# EUROPEAN PATENT APPLICATION

(11) **EP 4 087 048 A1**
(43) Date of publication of application: **09.11.2022**
(21) Application number: 20911065.9
(22) Date of filing: 28.07.2020
(51) Int. Cl.: H01M 50/50

(54) **EXTERNAL SHORT-CIRCUIT PROTECTION DEVICE FOR LITHIUM ION BATTERY**

(30) Priority: 30.12.2019 CN 201922440504 U
(71) Applicant: Hefei Guoxuan High-Tech Power Energy Co., Ltd., Hefei, Anhui 230012 (CN)
(72) Inventor: SHEN, Bingjie, Hefei, Anhui 230012 (CN); CAI, Steven, Hefei, Anhui 230012 (CN); CHENG, Qian, Hefei, Anhui 230012 (CN); LI, Xiaohui, Hefei, Anhui 230012 (CN); ZHANG, Ya, Hefei, Anhui 230012 (CN); LIN, Zhihong, Hefei, Anhui 230012 (CN)
(74) Representative: HGF
(86) International application number: PCT/CN2020/105065
(87) International publication number: WO 2021/135190

(57) **Abstract**

The present invention provides an external short-circuit protection apparatus for a lithium ion battery. The external short-circuit protection apparatus for the lithium ion battery includes at least one battery cell and a bus bar, wherein each battery cell is provided with a conductive tab, the conductive tab is adjacent to the bus bar, and under an action of external force, the bus bar and the conductive tab are in contact with or separated from each other to be electrically connected to or disconnected from each other. The bus bar is provided with an elastic bent portion, and under the action of a cover plate, an elastic bent portion of the bus bar and the conductive tab are in contact with or separated from each other to be electrically connected to or disconnected from each other. According to the present invention, a clamping column, made from a heat-sensitive material, on the cover plate is used for pressing the conductive tab against the bus bar to produce a contact conductive loop; and once the battery has an external short circuit, a temperature in a pressing area rises rapidly, the clamping column softens or decomposes, accordingly, pressing force disappears, the conductive tab is separated from the bus bar to disconnect the circuit, and the external short circuit of the battery is stopped, thus protecting safe use of the battery.

## Description

### Technical Field

The present invention relates to a technical field of lithium ion batteries, in particular to an external short-circuit protection apparatus for a lithium ion battery.

### Background

Lithium-ion batteries have been used in an increasingly wider range of new energy vehicles and energy storage systems. A lithium-ion battery system includes several battery modules each of which is composed of several single battery cells in series-parallel connection. That is, when the cells are assembled into the battery module, the cells need to be connected in a series-parallel manner. Adjacent cells are usually connected as follows: in one way, conductive tabs are directly connected through ultrasonic welding, and in the other way, a bus bar is used for adapting, that is, all conductive tabs are welded to the bus bar through laser welding to form a conductive channel. In both connection ways, it is inevitable to weld the conductive tabs, which requires a large number of devices and complex technology. Moreover, cell disassembly, if required later, is inconvenient, and accordingly, waste is caused. In addition, in the case of abnormality, such as an external short circuit, the cells are likely to discharge continuously at a high current due to common absence of obvious weak links in conducting loops, which is likely to lead to heat accumulation of the battery, and further thermal runaway and thermal diffusion are probable, posing great safety risks to the battery system. To this end, it is essential to set an overcurrent self-protection function on the battery and the module structure, and safe application level of lithium batteries can be greatly improved with the function.

### Summary

Some embodiments of the present invention provide an external short-circuit protection apparatus for a lithium ion battery, which may automatically disconnect a circuit to achieve protection when an external short circuit occurs.

Some embodiments of the present invention provide the following technical solution:
The external short-circuit protection apparatus for a lithium ion battery includes at least one battery cell and a bus bar, wherein each battery cell is provided with a conductive tab, the conductive tab is adjacent to the bus bar, and under an action of external force, the bus bar and the conductive tab are in contact with or separated from each other to be electrically connected to or disconnected from each other.

In some embodiments, the external short-circuit protection apparatus for the lithium ion battery further includes a support for fixing the bus bar, wherein the support is provided with a tab hole cooperated with the conductive tab, and the conductive tab passes through the tab hole to be adjacent to the bus bar.

In some embodiments, the external short-circuit protection apparatus for the lithium ion battery further includes a cover plate, wherein the cover plate is mounted over the bus bar, the bus bar is provided with an elastic bent portion, and under an action of a pressure of the cover plate, the conductive tab and the elastic bent portion of the bus bar are electrically connected to or disconnected from each other.

In some embodiments, the cover plate is provided with at least one clamping column, the at least one clamping column presses/loosens the conductive tab against/from the elastic bent portion of the bus bar, and the at least one clamping column is made from a heat-sensitive material in entirety or in part.

All the at least one clamping column is made from the heat-sensitive material, or a periphery or an end of each clamping column is coated with a layer of heat-sensitive material, and the heat-sensitive material may be selected from polycarbonate, polyethylene carbonate and propylene carbonate, or a mixture of one of the above materials and a modified material which may improve conductivity of decomposable heat-sensitive resin or reduce a thermal decomposition temperature thereof. The modified material is a mixture of a carbon material and a catalyst or a mixture of glass fiber and a catalyst. The polycarbonate begins to soften at 215°C and decomposes at 340°C. If the modified material is added, the thermal decomposition temperature may be reduced to about 230°C. That is, when the temperature rises to 215°C, the clamping column is likely to soften, and then decompose if the temperature continues rising, which means that pressing force of the clamping column on the bus bar and the conductive tab decreases until zero.

An embodiment of the present invention only protects a structure of the product, and does not involve specific material composition thereof. For selection of the specific heat-sensitive material and the modified material, reference may be made to selection of materials for a thermal decomposition material layer in a serial patent "Solderless Connector for Electrical Connection of Battery Cell and Lithium Ion Battery Including Connector" laid out on the same day by the inventor of the present invention.

That is, when the battery has the external short circuit, the temperature rises rapidly, and when the temperature rises to a softening or decomposition temperature of the heat-sensitive material, the each clamping column softens or decomposes into carbon dioxide, water and the carbon material. That is, the pressing force of the clamping column on the bus bar and the conductive tab becomes smaller or disappears, such that the tab of the battery cell is disconnected from a connecting member, the battery cells is disconnected from each other, thermal runaway is prevented, and safety of the battery is greatly improved.

According to different series-parallel relations, cells form a battery module, and adjacent cells are connected through the support, the bus bar and the cover plate, that is, the conductive tab of the cell passes through the support to be in contact with or separated from the elastic bent portion on the bus bar to be electrically connected to or disconnected from each other; the conductive tab is pressed, by the clamping column on the cover plate, against the elastic bent portion to keep the connection state; and in addition, the at least one clamping column is made from the heat-sensitive material in entirety or in part, and may soften quickly when the temperature is high, so the tab is pressed against the bus bar, then is loosened from the bus bar and finally is separated from the bus bar, thus disconnecting a current loop and fulfill functions of self-disconnection and self-protection.

That is, the bus bar according to the present invention is switched on through direct contact of the elastic bent portion with the conductive tab, and welding the conductive tab on the bus bar is no longer needed, such that simple connection and convenient operation are achieved.

In some embodiments, the bus bar includes a substrate, two ends of the substrate are bent towards a same side to form side edges respectively, ends of the side edges are further bent to form the elastic bent portions to be connected to the conductive tab, and the elastic bent portions switch adjacent conductive tabs on in a contact manner.

According to the present invention, since the bus bar varies in structure, the cover plate changes in structure adaptively in a following implementation manner: each side edge is located over the substrate, and the elastic bent portion is formed by outwards bending the side edge downwards, and a tab recess with a downward opening for the conductive tab to be inserted therein is provided between the elastic bent portion and a corresponding side edge; and the clamping column is positioned on outer sides of the elastic bent portion and the side edge, and presses the conductive tab inserted in the tab recess tightly.

In some embodiments, an end of the each elastic bent portion bulges towards the side edge to form a cambered buckling portion.

In the other implementation manner: the side edge is located over a bus bar body (the substrate), the elastic bent portion is formed by inwards bending the side edge downwards, and a cavity with a downward opening is provided between the elastic bent portion and the side edge; and a top end of the conductive tab is bent to form a hook-like structure adapted to the elastic bent portion and the hook-like structure sleeves the elastic bent portion.

In some embodiments, the each elastic bent portion is wavy, and a convex edge which is continuous is formed on an outer end surface of the elastic bent portion.

In some embodiments, the bus bar is made from the conductive material, and the conductive material is copper or aluminum. The support is made from a non-metallic material, and the non-metallic material is plastic, such as acrylonitrile butadiene styrene (ABS)+polycarbonate (PC), polyamide 6 (PA6), PC, etc.

The bus bar according to an embodiment of the present invention is made from the conductive material, and is in contact with the conductive tab to be electrically connected to the same, thus avoiding welding operation. In addition, according to some embodiments of the present invention, the bus bar is provided into a bent shape, makes use of its own special elastic structure, and may always keep in contact with the conductive tab, through which, the conductive tab is no longer needed to be welded on the bus bar, thus greatly simplifying the process, and providing great benefit for later maintenance, including echelon use.

According to some embodiments of the present invention, the conductive tab is pressed against the elastic bent portion on the bus bar by the adapted to clamping columns on the cover plate, so the conductive tab is always kept in contact with the elastic bent portion on the bus bar, and does not loosen or fall off even if vibration occurs in the use process.

In addition, according to some embodiments of the present invention, the clamping column on the cover plate is made from the heat-sensitive material, and when a certain battery has an external short circuit, the temperature rises rapidly, the clamping column softens or decomposes, and the pressing force on the conductive tab and the bus bar becomes smaller until zero, thereby disconnecting the external short circuit, achieving the purpose of protecting the battery and guaranteeing the safety performance of the battery system.

Some embodiments of the present invention have the following beneficial effects: the clamping column, made from the heat-sensitive material, on the cover plate is used for pressing the conductive tab against the bus bar to produce a contact conductive loop, the battery is normally charged and discharged, and all structural members are stable and work normally; and once the battery has the external short circuit, a temperature in a pressing area rises rapidly, the clamping column softens or decomposes, the pressing force on the conductive tab and the bus bar disappears, that is, pressing contact is destroyed, the circuit is disconnected, and the external short circuit of the battery is stopped, thus protecting the safe use of the battery.

### Brief Description of the Drawings

Fig. 1 is a schematic structural diagram of an external short-circuit protection apparatus for a lithium ion battery according to Embodiment 1.
Fig. 2 is a side view of the external short-circuit protection apparatus for the lithium ion battery shown in Fig. 1.
Fig. 3 is a schematic diagram of a hot-melted cover plate in the external short-circuit protection apparatus for the lithium ion battery shown in Fig. 1.
Fig. 4 is a structural schematic diagram of the cover plate in the external short-circuit protection apparatus for the lithium ion battery shown in Fig. 1.
Fig. 5 is a structural schematic diagram of a bus bar in the external short-circuit protection apparatus for the lithium ion battery shown in Fig. 1.
Fig. 6 is a structural schematic diagram of an external short-circuit protection apparatus for the lithium ion battery of Embodiment 2.
Fig. 7 is a side view of the external short-circuit protection apparatus for the lithium ion battery shown in Fig. 6.
Fig. 8 is a structural schematic diagram of a cover plate in the external short-circuit protection apparatus for the lithium ion battery shown in Fig. 6.
Fig. 9 is a structural schematic diagram of a bus bar in the external short-circuit protection apparatus for the lithium ion battery shown in Fig. 6.

In the figures: 1A-first cover plate, 1B-second cover plate, 11-top plate, and 12-clamping column;
2A-first bus bar, 2B-second bus bar, 21-substrate, 22-side edge, 23-elastic bent portion, 24-cambered buckling portion and 25-convex edge; and
3-support, 31-tab hole; 4-conductive tab, and 5-battery cell.

### Detailed Description of the Embodiments

The technical solutions in embodiments of the present invention will be clearly and completely described below with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention.

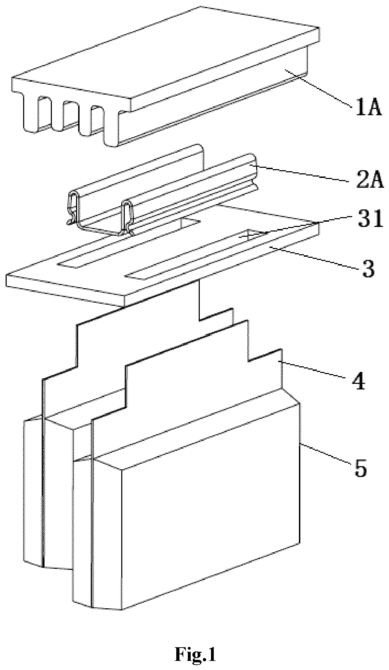

With reference to Figs. 1-9, an external short-circuit protection apparatus for a lithium ion battery includes a plurality of battery cells 5 (a battery) and a bus bar, where each battery cell 5 is provided with a conductive tab 4, the conductive tab 4 is adjacent to the bus bar, and under an action of external force, the bus bar and the conductive tab are in contact with or separated from each other to be electrically connected to or disconnected from each other.

The above external force may be achieved by pressing the bus bar with a mounted portion, such as a cover plate or a clamping column in another structure.

In some embodiments, the external short-circuit protection apparatus for the lithium ion battery further includes a support 3 for fixing the bus bar, where the support 3 is provided with a tab hole 31 adapted to the conductive tab, the conductive tab 4 passes through the tab hole 31 and then to be adjacent to the bus bar.

In some embodiments, the external short-circuit protection apparatus for the lithium ion battery further includes the cover plate, where the cover plate is mounted over the bus bar, the cover plate is provided with clamping columns 12, the bus bar is provided with an elastic bent portion 23, and the clamping columns 12 press or loosen the conductive tab 4 against or from the elastic bent portion 23 of the bus bar, so as to cause the conductive tab and the elastic bent portion of the bus bar to be electrically connected to or disconnected from each other.

Further, each clamping column 12 is made from a heat-sensitive material in entirety or in part.

In some embodiments, the bus bar, the support and the cover plate are combined to achieve external short circuit protection for the lithium ion battery. According to different series-parallel relations, cells form a battery module, and adjacent cells are connected through the support, the bus bar and the cover plate, that is, the conductive tab of the cell passes through the support to be adjacent to the elastic bent portion of the bus bar; the conductive tab is pressed, by the clamping column on the cover plate, against the elastic bent portion, so as to be in contact with and be electrically connected to same and maintain the state; and in addition, the each clamping column is made from the heat-sensitive material, and may soften or decompose quickly when the temperature is high, so the tab is pressed against the bus bar, then is loosened from the bus bar and finally is separated from the bus bar, thus disconnecting a current loop and fulfill functions of self-disconnection and self-protection.

Specific structures are implemented in the following two manners:

### Embodiment 1:

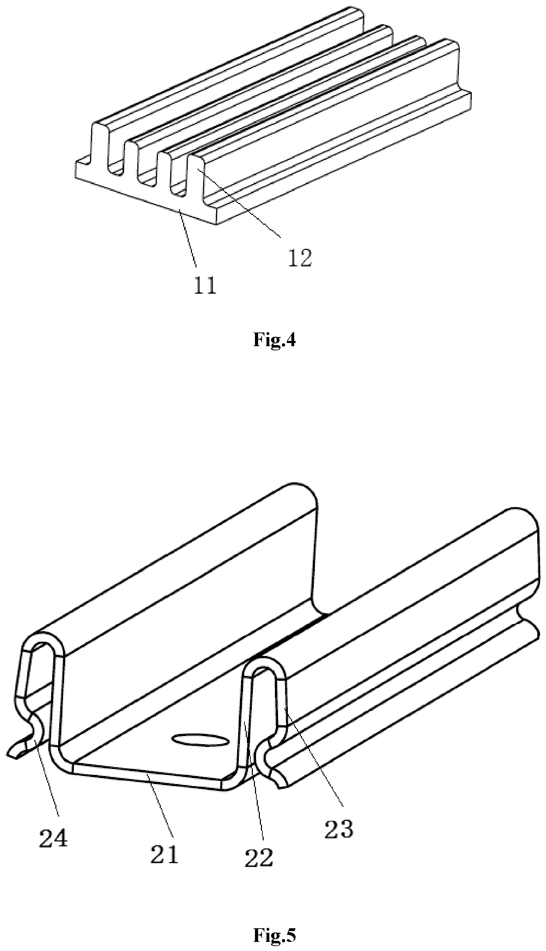

According to an embodiment of the present invention, since the bus bar varies in structure, the cover plate changes in structure adaptively in an implementation manner shown in Figs. 1-5 as follows:
An external short-circuit protection apparatus for a lithium ion battery includes conductive tabs 4 and a first bus 2A for connecting adjacent conductive tabs 4. The first bus 2A includes a substrate 21, two ends of the substrate 21 are bent towards the same side to form side edges 22, each side edge 22 is located over the substrate 21, the each side edge 22 is outwards bent downwards into an elastic bent portion 23, and a tab recess (as shown in Fig. 5) with a downward opening for the conductive tab to be inserted therein is provided between the elastic bent portion 23 and the side edge 22. A first cover plate 1A is arranged over the first bus 2A, the first cover plate 1A includes a top plate 11, and a bottom end surface of the top plate 11 is fixedly provided with clamping columns 12, as shown in Fig. 4, clamped on the first bus bar 2A in an adapted manner. As shown in Fig. 4, there are four clamping columns, two clamping columns in a middle are clamped between two side edges 22, and the clamping columns on the two sides are correspondingly pressed against outer sides of the elastic bent portions 23, and the conductive tabs 4 inserted in the tab recess are pressed against the first bus 2A to be switched on.

In some embodiments, an end of each elastic bent portion 23 bulges towards the corresponding side edge 22 to form a cambered buckling portion 24.

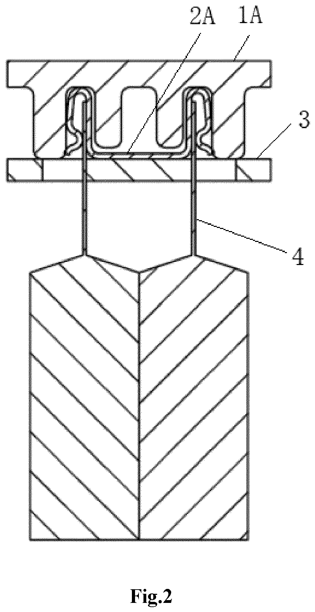

As mounted in Fig. 1 and Fig. 2, an end of the conductive tab 4 of a battery cell 5 passes through the tab hole 31 of the support 3, and then is inserted into the tab recess with the downward opening provided between the elastic bent portion 23 and the side edge 22, then a first cover plate 1A is placed over the first bus bar 2A, the two clamping columns 12 located in the middle match a groove between two side edges 22 over the first bus 2A, the clamping columns 12 located on two sides are separately pressed against the outer sides of the elastic bent portions 23, so as to press the elastic bent portion to cause the conductive tab 4 to form surface contact with the bus bar 2A to be switched on. In addition, an end of the elastic bent portion 23 bulges towards the side edge to form the cambered buckling portion 24, such that the cambered buckling portion 24 always abuts against the conductive tab 4, and the conductive tab 4 comes into closer contact with the elastic bent portion 23; and further, since the conductive tab is in elastic contact with the elastic bent portion, the conductive tab is always kept in contact with the elastic bent portion even if the batteries are relatively displaced due to vibration during use.

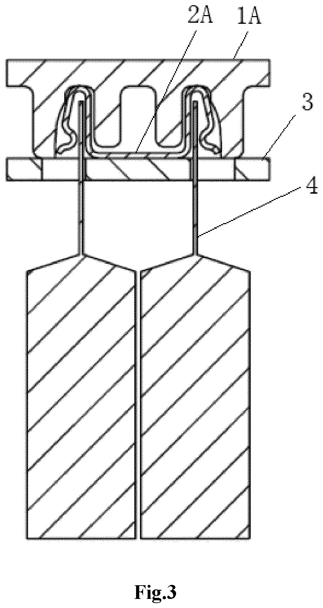

When an external short circuit occurs in a certain battery cell, an overcurrent on the conductive tab may generate heat, resulting in rapid temperature rising. Heat conduction causes the clamping column to soften or decompose, the external force originally produced by pressing makes the conductive tab in contact with the first bus 2A to be switched on, and as the external force disappears, contact pressure between the conductive tab and the first bus bar becomes smaller until zero, thereby disconnecting the external short circuit (as shown in Fig. 3), achieving the purpose of protecting the battery and guaranteeing the safety performance of the battery system.

### Embodiment 2:

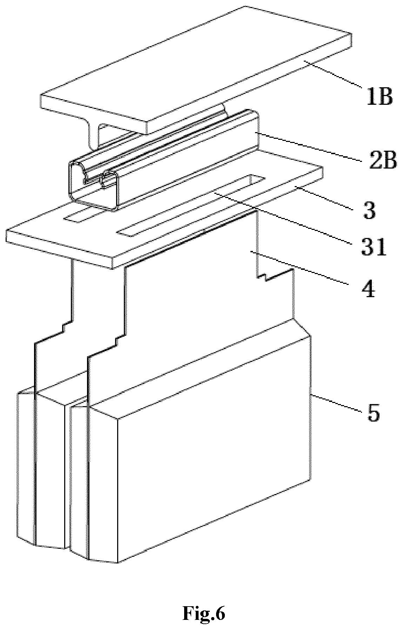

As shown in Figs. 6-9, an external short-circuit protection apparatus for a lithium ion battery includes a plurality of conductive tabs 4 and a second bus bar 2B for connecting adjacent conductive tabs 4. The second bus bar 2B includes a substrate 21, two ends of the substrate 21 are bent towards the same side to form side edges 22, each side edge 22 is located over the substrate 21, and the side edges 22 are outwards bent downwards into elastic bent portions 23 to provide a cavity with a downward opening therein and then form an elastic overhang structure.

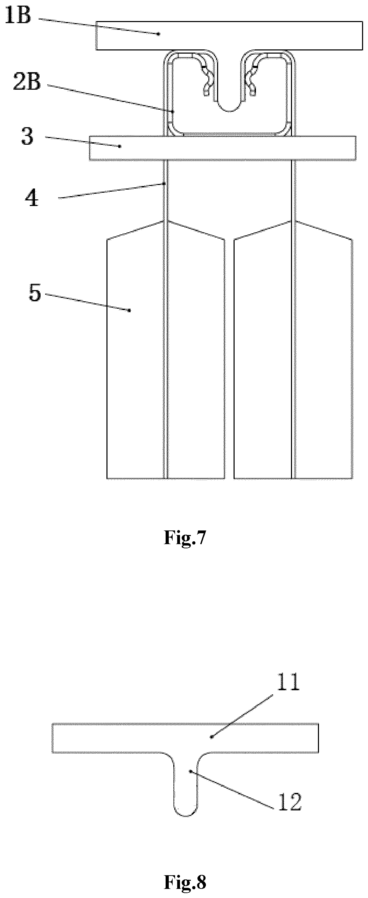

A second cover plate 1B is arranged over the second bus bar 2B, the second cover plate 1B includes a top plate 11, a bottom end surface of the top plate 11 is fixedly provided with a clamping column 12 clamped on the second bus bar 2B in an adapted manner, as shown in Fig. 8, one clamping column is arranged to match a clamping groove between the two elastic bent portions 23, and when mounted and pressed down, an external pressure is applied to the two elastic bent portions 23 at the same time, and each conductive tab 4 clamped on and sleeving the elastic bent portion is pressed against the second bus bar 2B to be switched on.

A top end of the conductive tab 4 is bent to form a hook-like structure adapted to the elastic bent portion 23 to sleeve the elastic bent portion 23 (as shown in Fig. 7), and the clamping column 12 is located in the clamping groove to press the conductive tab 4 on the elastic bent portion 23.

In some embodiments, the elastic bent portion 23 is wavy, and a continuous convex edge 25 is formed on an outer end surface of the elastic bent portion.

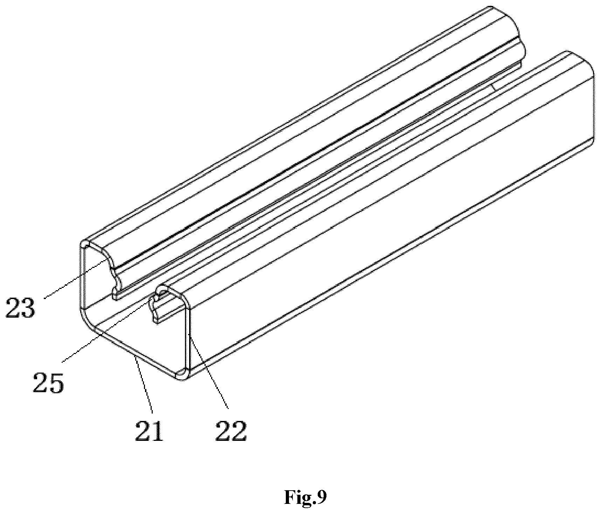

The convex edge 25 may be horizontal or vertical as shown in Fig. 9, so as to keep a better contact and switch-on state between the conductive tab 4 and the elastic bent portion 23.

As mounted in Fig. 6, an end of the conductive tab 4 of the battery cell 5 passes through the tab hole 31 of the support 3 to be bent to form a hook shape, and then is clamped on and sleeves the elastic bent portion 23, and then the second cover plate 1B is mounted, such that the clamping column of the second cover plate 1B is inserted into a cavity between the two elastic bent portions 23, so as to press the two elastic bent portions 23 at the same time, and cause the conductive tab 4 to be in close contact with the elastic bent portion 23. In addition, the convex edge 25 on the outer end surface of the elastic bent portion 23 further keeps a better contact and switch-on state between the conductive tab 4 and the elastic bent portion 23.

The bus bar according to an embodiment of the present invention is made from the conductive material, and is in contact with the conductive tab to be electrically connected to the same, thus avoiding welding operation. In addition, according to an embodiment of the present invention, the bus bar is designed into a bent shape, makes use of its own special elastic structure, and may always keep in contact with the conductive tab, through which, the conductive tab is no longer needed to be welded on the bus bar. The conductive tab is pressed against the elastic bent portion on the bus bar by the adapted clamping columns on the cover plate, so the conductive tab is always kept in contact with the elastic bent portion on the bus bar, and does not loosen or fall off even if vibration occurs in the use process.

In addition, according to an embodiment of the present invention, the clamping column on the cover plate is made from the heat-sensitive material, and when a certain battery has an external short circuit, an overcurrent on the conductive tab may generate heat, the temperature rises rapidly, heat conduction causes the clamping column to soften or decompose, and as external pressing force disappears, contact pressure on the conductive tab and the bus bar becomes smaller until zero, thereby disconnecting the external short circuit, achieving the purpose of protecting the battery and guaranteeing the safety performance of the battery system.

Although the specification is described according to the embodiments, not every embodiment includes merely one independent technical solution. The narrative manner of the specification is merely for the sake of clarity. Those skilled in the art should take the specification as a whole, and the technical solutions in each embodiment may be appropriately combined to form other embodiments that may be understood by those skilled in the art.

Therefore, what is described above is merely some embodiments of the present invention, and is not intended to limit the scope of implementation of the present invention. That is, all equivalent transformations made according to the present invention shall fall within the protection scope of the present invention.

## Claims

1. An external short-circuit protection apparatus for a lithium ion battery, comprising:
at least one battery cell;
a bus bar; and
a conductive tab, wherein each battery cell is provided with the conductive tab, the conductive tab is adjacent to the bus bar, and under an action of external force, the bus bar and the conductive tab are in contact with or separated from each other to be electrically connected to or disconnected from each other.

2. The external short-circuit protection apparatus as claimed in claim 1, further comprising a support for fixing the bus bar, wherein the support is provided with a tab hole cooperated with the conductive tab, and the conductive tab passes through the tab hole to be adjacent to the bus bar.

3. The external short-circuit protection apparatus as claimed in claim 1, further comprising a cover plate, wherein the cover plate is mounted over the bus bar, the bus bar is provided with an elastic bent portion, and under an action of a pressure of the cover plate, the conductive tab and the elastic bent portion are electrically connected to or disconnected from each other.

4. The external short-circuit protection apparatus as claimed in claim 3, wherein the cover plate is provided with at least one clamping column, the at least one clamping column presses/loosens the conductive tab against/from the elastic bent portion of the bus bar, and the at least one clamping column is made from a heat-sensitive material in entirety or in part.

5. The external short-circuit protection apparatus as claimed in any one of claims 1-4, wherein the bus bar comprises a substrate, two ends of the substrate are bent towards a same side to form side edges respectively, ends of the side edges are further bent to form the elastic bent portions to be connected to the conductive tab, and the elastic bent portions connect adjacent conductive tabs in a contact manner.

6. The external short-circuit protection apparatus as claimed in claim 5, wherein each side edge is located over the substrate, and each elastic bent portion is formed by outwards bending a corresponding side edge in the side edges downwards, and a tab recess with a downward opening for the conductive tab to be inserted therein is provided between the each elastic bent portion and the corresponding side edge; and at least one clamping column is arranged on the cover plate, and the at least one clamping column is positioned on outer sides of the elastic bent portion and the side edge, and presses the conductive tab inserted in the tab recess tightly.

7. The external short-circuit protection apparatus as claimed in claim 6, wherein an end of the each elastic bent portion bulges towards the side edge to form a cambered buckling portion.

8. The external short-circuit protection apparatus as claimed in claim 5, wherein each side edge is located over the substrate, the each elastic bent portion is formed by inwards bending a corresponding side edge downwards, and a cavity with a downward opening is provided between the each elastic bent portion and the corresponding side edge; and a top end of the conductive tab is bent to form a hook-like structure adapted to the elastic bent portion to sleeve the elastic bent portion.

9. The external short-circuit protection apparatus as claimed in claim 8, wherein the each elastic bent portion is wavy, and a convex edge is formed on an outer end surface of the each elastic bent portion.

10. The external short-circuit protection apparatus as claimed in claim 8 or 9, wherein the cover plate is provided with a clamping column adapted to a clamping groove between the two elastic bent portions, and when mounted and pressed down, the clamping column is positioned in the clamping groove to press the conductive tab against the each elastic bent portion.
